# DEMANDE DE BREVET EUROPEEN

(11) **EP 1 645 776 A1**
(43) Date de publication de la demande: **12.04.2006**
(21) Numéro de dépôt: 05108605.6
(22) Date de dépôt: 19.09.2005
(51) Int. Cl.: F16F 15/34, G01M 1/32

(54) **Masses d'équiibrage extrudables**

(30) Priorité: 06.10.2004 FR 0410567
(71) Demandeur: Societe de Technologie Michelin STM, 63000 Clermont-Ferrand (FR); MICHELIN RECHERCHE ET TECHNIQUE S.A., 1763 Granges-Paccot (CH)
(72) Inventeur: Peyron, Georges, 63200 Riom (FR); Isnard, Roger, 63000 Clermont-Ferrand (FR); Viegas, Nathalie, 63200 Riom (FR)
(74) Mandataire: Bauvir, Jacques

(57) **Abrégé**

Procédé et dispositif d'équilibrage d'une roue (R) de véhicule automobile caractérisé en ce que une masse d'équilibrage est déposée directement sur l'intérieur d'une jante (J) à l'azimut désiré par extrusion d'une quantité prédéterminée et ajustable d'un mélange (M) constitué d'une matrice thermoplastique et adhésive, et de charges pondérales de fortes densité.

## Description

La présente invention concerne un nouveau procédé destiné à l'équilibrage d'un ensemble mécanique ainsi qu'un dispositif et un matériau adaptés à la mise en oeuvre dudit procédé.

La maîtrise des vibrations entraînées par la mise en mouvement des pièces mécaniques, et en particulier les vibrations induites par les imperfections des pièces mécaniques en rotation conduit à équilibrer lesdites pièces. Usuellement l'équilibrage se fait en fonction des axes de rotation de la pièce et vise à compenser les irrégularités de masse de manière à annuler les moments statiques ou dynamiques par rapport à cet axe.

Pour mener à bien cette opération on dispose d'un procédé de mesure de l'équilibrage permettant dans un premier temps d'évaluer ces moments résiduels puis, dans un deuxième temps, de retirer ou, plus couramment, d'ajouter de manière localisée des masses d'une valeur prédéterminée.

Dans le cas de l'équilibrage de la roue d'un véhicule automobile constituée d'une jante et d'un pneumatique, l'ajout d'une masse se fait par fixation d'un élément pondéreux, usuellement en plomb, sur la partie intérieure de la jante ou encore sur le crochet de jante.

Les masses d'équilibrage les plus courantes se composent d'une masse pré calibrée dont la forme est étudiée pour s'adapter sur la partie de la jante où ladite masse est fixée, et d'un moyen de fixation tel qu'une agrafe métallique, ou encore un élément comprenant une face adhésive.

Toutefois le processus usuel d'équilibrage des roues de véhicule ne permet pas encore d'atteindre la précision souhaitée en raison du pré calibrage des masses par pas de 5 ou 10 grammes. Ce processus souffre également d'un coût de revient élevé en raison de la nécessité de réaliser la fixation des masses à l'aide de moyens généralement manuels.

L'invention propose d'apporter des solutions originales à ces deux problèmes.

Le procédé d'équilibrage conforme à la présente invention consiste à déposer directement par extrusion et à l'endroit désiré sur un substrat, une quantité prédéterminée et ajustable d'un mélange constitué d'une matrice thermoplastique et adhésive, et de charges pondérales de fortes densité.

A ce titre, le procédé n'est pas sans analogie avec le dépôt d'une quantité donnée de pâte de dentifrice sur une brosse à dent.

Plus spécifiquement ce procédé est parfaitement adapté pour réaliser l'équilibrage d'une roue de véhicule automobile.

De cette manière, la masse requise peut être ajustée avec une grande précision, et il devient possible d'automatiser entièrement l'opération de dépose du mélange, ce qui a pour effet de réduire considérablement le coût de réalisation de cette opération.

Afin de rendre faisable la mise en oeuvre du procédé conforme à l'invention, il convient de choisir judicieusement le mélange et le moyen d'extrusion.

Il est connu de l'art antérieur de réaliser des masses d'équilibrage à l'aide d'un mélange d'une matrice thermoplastique contentant des métaux lourds. Ainsi, La publication DE 24 11 077 divulgue la réalisation de masse à partir d'un mélange de matières plastiques et de métaux lourd sous forme de granulés extrudables.

La publication FR 2 823 818 propose de réaliser par injection, dans un moule de forme prédéterminée, des masses composées d'une matière thermoplastique renfermant une charge pondérale constituée de particules métalliques.

Toutefois ces publications sont limitées à la réalisation de masses pré calibrées et de forme traditionnelle, et sont destinées à remplacer les masses d'équilibrage courantes, de manière à répondre à des besoins de nature environnementale ou esthétique. Ces masses comprennent un moyen de fixation tel qu'une agrafe métallique ou un élément comprenant une face adhésive.

L'invention consiste également à sélectionner une matrice thermoplastique présentant, dans les conditions de température déterminées proches du point de fusion et après refroidissement, des propriétés d'adhésion avec le substrat sur lequel la masse d'équilibrage est destinée à être placée. En extrudant à chaud le mélange thermoplastique constitué de ladite matrice adhésive il est possible de déposer directement sur le substrat le volume précis désiré. En refroidissant le matériau adhère audit substrat.

Dans le cas de l'équilibrage d'une roue de véhicule on déposera la quantité désirée de mélange directement sur la partie intérieure de la jante, sur laquelle il se fixera par adhésion. Il n'est donc plus nécessaire de réaliser de masses d'équilibrage pré calibrées comprenant un moyen de fixation particulier.

Le moyen d'extrusion devra également être adapté pour déposer le volume précis de mélange. On choisira de préférence un moyen d'extrusion volumétrique du type extrusion par piston ou par pompe à engrenage, éventuellement couplé à une extrudeuse à vis, de manière à pouvoir contrôler précisément le volume extrudé et par là même la masse déposée, dés lors qu'il est possible de maîtriser la masse volumique du mélange.

Un autre aspect de l'invention consiste à réaliser des masses d'équilibrages pré calibrées avec un mélange constitué d'une matrice thermoplastique et adhésive, et de charges pondérales de forte densité.

Après avoir déterminé à l'aide d'une machine de mesure la valeur de la masse à poser et l'azimut de pose, il est possible, à l'aide de moyens de chauffage appropriés, de porter à la température de fusion une partie de la surface de la masse d'équilibrage et de déposer directement la masse sur le substrat à l'endroit désiré. On notera également que ces masses ne comportent pas de moyens de fixations tels qu'une agrafe métallique ou un élément comprenant une face adhésive.

Les avantages liés à la mise en oeuvre de l'invention apparaîtront dans la description ci après, laquelle se propose de donner des exemples, non limitatifs, de réalisation et d'utilisation, en s'appuyant sur les figures dans lesquelles :
- la figure 1 représente une vue schématique en perspective d'une machine d'équilibrage de roue de véhicule automobile couplée à un moyen d'extrusion conforme à l'invention,
- la figure 2 représente une vue rapprochée de la même machine et du même moyen d'extrusion,

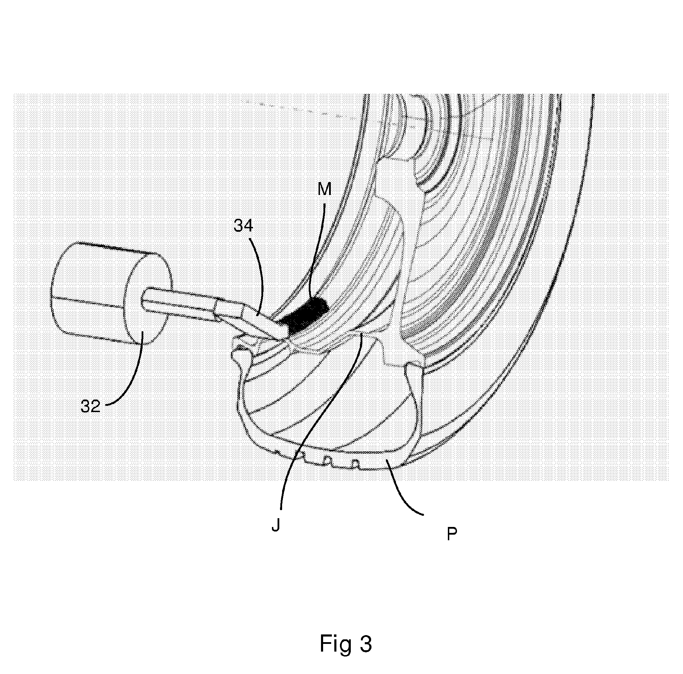

- la figure 3 représente une vue schématique en perspective de la tête d'extrusion en train de déposer un mélange conformément à l'invention.

La matrice thermoplastique peut être choisie parmi la famille des colles thermo fusibles actuellement disponibles dans le commerce.

Pour une application dans le domaine de l'équilibrage des roues de véhicules automobiles il conviendra de sélectionner une matrice présentant les caractéristiques aptes à résister aux conditions particulièrement sévères d'emploi du véhicule. La matrice devra résister à des températures d'utilisation particulièrement élevées en raison des dégagements de chaleurs provenant des systèmes de freinage, elle devra également résister aux ambiances liées aux environnements des véhicules tels que la présence de sel, d'hydrocarbures, ainsi qu'à l'oxydation et aux rayonnements solaires.

Enfin les propriétés d'adhésion devront être adaptées pour résister aux forces liées aux accélérations et aux décélérations du véhicule sans toutefois rendre impossible le décollage de la masse lorsque cela s'avère nécessaire en particulier lors du rééquilibrage de la roue.

On notera que, en cas d'arrachement de la masse, le caractère plastique du matériau qui la compose ne fait pas craindre de risque de dégradation du système de freinage au cas où la masse viendrait accidentellement se loger dans le mécanisme de ce dernier.

Les résines polyamides ou copolyamides réalisées à partir de la réaction d'acides gras dimères avec des diamines, peuvent convenir à ce type d'application. Ces compositions contiennent un copolyamide et une résine permettant d'abaisser le point de fusion par rapport à un polyamide classique. A titre d'exemple, le Thermelt 869, fourni par la Société Mydrin TRL, a donné des résultats satisfaisants sur l'ensemble des critères énoncés ci-dessus.

Il est également possible de sélectionner un matériau thermo fusible réactif tel qu'une résine polyuréthane. A titre d'exemple des essais satisfaisants ont été réalisés avec la référence 700.5 de la Société Kleiberit. Toutefois, les conditions de mise en oeuvre, liées à la manipulation de plusieurs composants, rendent le choix de ce matériau plus délicat et nécessite d'adapter le procédé comme on le verra par la suite.

Le choix d'une matière pondéreuse de forte densité peut se faire de préférence parmi les métaux lourds tels que, à titre non limitatif, le plomb, le zinc, le fer, le bronze, le laiton, le maillechort, le tungstène, l'étain ou encore le cuivre.

Pour une application destinée à l'équilibrage de roues de véhicules automobile on recherchera un métal présentant un coût faible, ayant une résistance élevée à la corrosion, et non susceptible de former un couple électrolytique avec la jante. A ce titre, s'il est encore possible de choisir le plomb qui présente une masse volumique élevée, les contraintes écologiques conduisent à préférer le zinc ou encore le fer. On notera que dans le cas de ce dernier matériau, la matrice thermoplastique peut jouer un rôle de protection contre les agents externes et isoler la masse par rapport à la roue. Le métal sera utilisé sous forme de poudre métallique.

A titre d'exemple la poudre de zinc distribuée par l'Union Minière de Belgique et présentant une taille de particules comprises entre 11 et 16 µm a donné des résultats satisfaisants.

Le mélange de la matrice thermoplastique avec la charge pondérale peut se faire à la fin du cycle de fabrication du polymère thermoplastique et se déroule conformément aux étapes classiques suivantes :
- pesée et dosage des produits de base : matrice thermoplastique, charge pondéreuse.
- fusion de la matrice thermoplastique,
- dégazage (éventuellement sous vide) et homogénéisation de la matrice thermoplastique fondue,
- ajout graduel de la charge préchauffée à la température de fusion,
- homogénéisation (si possible sous atmosphère neutre pour éviter l'oxydation des particules métalliques et du polymère) du mélange.

On observe que la limite de solubilité des poudres métalliques dans un liant thermoplastique se situe aux environs de 60% en volume. A titre d'exemple un mélange réalisé à partir d'une matrice thermoplastique de type Thermelt 869 et de poudre de zinc dans une proportion de 50% du volume de thermoplastique permet d'obtenir un produit ayant une masse volumique de l'ordre de 4,7 g/cm³.

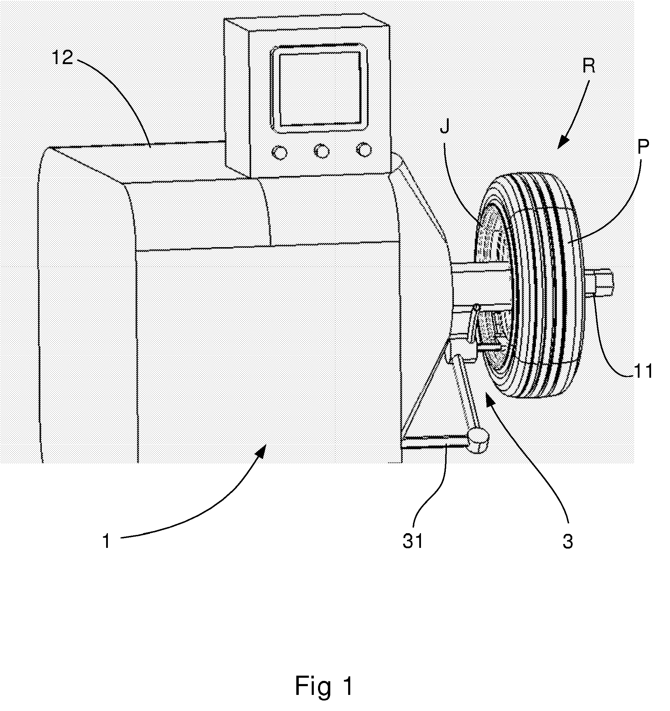

La figure 1 représente un dispositif commun d'équilibrage 1 de roue de véhicule automobile sur lequel on vient fixer une roue R composée d'une jante J et d'un pneumatique P, sur un axe de mesure 11 relié à un châssis 12. Le châssis 12 abrite un moteur (non visualisé) permettant de faire tourner l'axe de mesure 11, ainsi qu'un ensemble de moyens électroniques de mesure (non visualisé) permettant d'évaluer les efforts transmis à l'axe 11 par la roue R lorsque cette dernière est mise en rotation.

Les machines de mesure les plus courantes permettent d'évaluer les balourds statiques et dynamiques de la roue autour de son axe de rotation. Elles disposent d'un calculateur (non visualisé) ayant pour fonction de déterminer la valeur des masses d'équilibrage destinées à compenser ces déséquilibres ainsi que l'azimut circonférentiel où il convient de déposer ces masses sur chacune des pistes d'équilibrages de la jante disposées sur deux plans axialement décalés et prédéterminés en fonction des dimensions particulières de la jante J.

Un moyen d'extrusion 3 est relié au châssis 12 de la machine d'équilibrage par un bras télescopique 31. Les mouvements dans les directions axiales et radiales du bras télescopique 31 peuvent être réalisés manuellement ou de préférence pilotés par l'automatisme de la machine d'équilibrage 1.

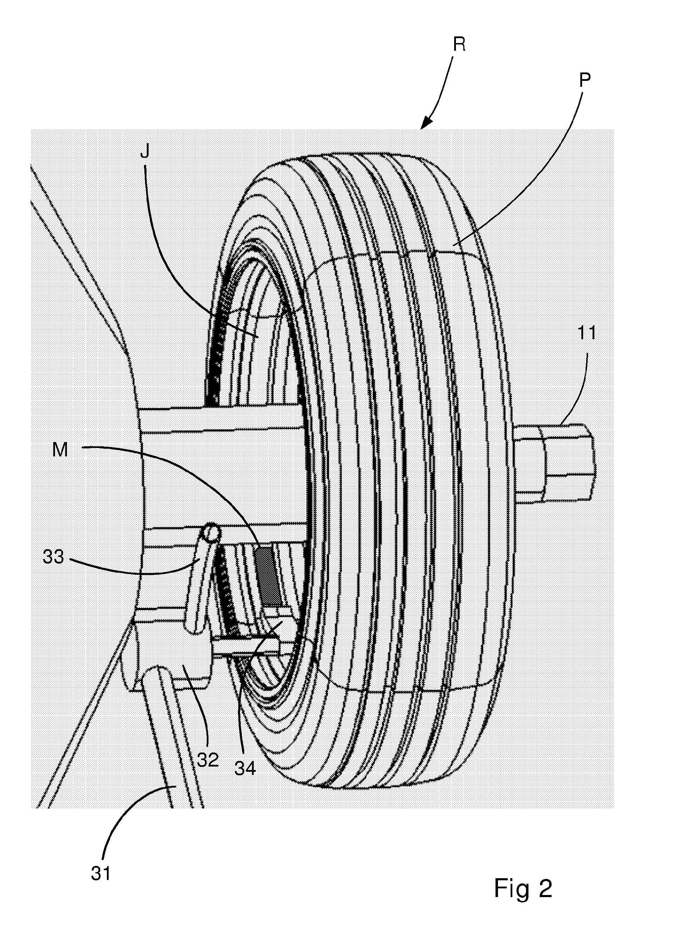

Le moyen d'extrusion 3 comprend un piston d'extrusion 32 se déplaçant dans un cylindre, un système d'alimentation 33 et une tête d'extrusion 34, tel que cela est représenté sur la figure 2. La course du piston est pilotable de manière à délivrer un volume ajustable et prédéterminé de mélange M. La longueur de la course du piston peut être avantageusement déterminée par l'automatisme de la machine d'équilibrage en fonction de paramètres tels que la masse volumique du mélange, la masse nécessaire à déposer et le diamètre du cylindre.

Le système d'alimentation 33 est relié à un dispositif de stockage du mélange en fusion (non représenté).

Tous ces organes sont régulés en température pour maintenir le mélange M aux niveaux de température et de fluidité requis.

Le bras 31 permet de positionner axialement et radialement la tête d'extrusion 34 de manière à ce que l'orifice de sortie de ladite tête affleure la partie intérieure de la jante J au niveau de la piste d'équilibrage.

En faisant tourner l'axe 11, on pré positionne la jante de telle manière que l'azimut où il convient de déposer la masse soit situé en face de la sortie de la tête d'extrusion.

Le dépôt de la masse d'équilibrage se fait en actionnant simultanément le piston d'extrusion et la rotation de l'axe 11 de manière à faire défiler la jante par rapport à l'orifice de sortie de la tête d'extrusion 34, tout en déposant un cordon de mélange M dans des conditions contrôlées de maîtrise de la géométrie dudit cordon.

En effet, la combinaison de ces mouvements doit être pilotée avec précision car ils déterminent la géométrie de la masse d'équilibrage déposée sur la jante J.

Pour ce faire il s'avère judicieux de déterminer la géométrie de la sortie de la tête d'extrusion en fonction de la hauteur et de la largeur du ruban à déposer. Dans ces conditions il ne reste plus qu'à ajuster la vitesse de défilement de la jante à la vitesse de sortie du mélange M de la tête d'extrusion elle-même reliée à la vitesse de déplacement du piston.

Ce procédé permet d'ajuster la quantité de mélange déposé avec une précision inférieure au gramme.

S'il s'avère particulièrement avantageux confier le pilotage de ces mouvements à l'automatisme de la machine d'équilibrage, il est aussi tout à fait possible de réaliser manuellement ces opérations en ajustant la vitesse de rotation de la jante J à la vitesse d'extrusion du mélange M. Ce tour de main peut se révéler particulièrement utile lorsque l'on ne dispose pas de la possibilité de coupler le moyen d'extrusion 3 avec la machine d'équilibrage. Cette situation se présente lorsque l'on utilise un moyen d'extrusion manuel et portatif adapté à cet usage et pour lequel le procédé objet de l'invention s'applique sans difficultés, sous réserve d'acquérir le tour de main requis.

Le procédé d'équilibrage décrit ci-dessus et sur la figure 1 est un procédé dont l'axe de mesure 11 est horizontal et qui est le plus couramment utilisé dans les garages.

Il est facile de concevoir que le procédé de l'invention est également tout à fait adapté pour un usage sur un procédé industriel dans lequel l'axe de mesure est le plus souvent vertical. De plus, il est également possible de disposer le moyen d'extrusion 3 sur un poste dédié, intégré dans une chaîne de montage et situé en aval du poste de mesure, et sur lequel s'effectue l'extrusion de la masse de mélange M à l'azimut et sur la piste d'équilibrage désiré. Cet arrangement a pour avantage de ne pas immobiliser la machine d'équilibrage pendant la pose de la masse et d'améliorer le rendement global de la chaîne de montage.

Dans le cas où l'on choisirait l'usage d'un mélange M à base de produits réactifs tels que le polyuréthane il convient d'adapter le dispositif d'alimentation de l'ensemble d'extrusion de manière à ce que l'on puisse facilement vidanger ce dernier en cas d'arrêt momentané de l'installation de dépose de la masse. De plus, le temps de polymérisation devra être adapté pour que les conditions de fluidité en sortie de la tête d'extrusion soient compatibles avec la dépose du mélange M sur le substrat ou, dans le cas particulier d'une roue de véhicule automobile, sur l'intérieur de la jante.

On observera que le volume à déposer est plus élevé que le volume des masses traditionnelles fixées sur le crochet de jante. De plus la hauteur de la masse ne peut dépasser certaines limites liées en particulier à l'encombrement du système de freinage placé à l'intérieur de la jante. Dans ces conditions on fixera au mieux la largeur et la longueur du cordon à déposer sur la jante et, de manière à éviter les inconvénients esthétiques liés au dépôt d'une quantité jugée trop importante de mélange, on choisira judicieusement les pistes d'équilibrage en fonction des reliefs de la jante. Néanmoins, du fait du mode dépose du mélange M sur la partie intérieure de la jante et des propriétés visqueuses du mélange à la sortie de la tête d'extrusion, il n'y a aucune difficulté à faire adopter à la masse d'équilibrage le profil de la piste d'équilibrage choisi ; ce qui permet de s'affranchir de la contrainte liée au profil particulier de ces pistes lors de la conception de la roue.

De plus il est tout à fait possible d'ajouter un colorant dans le mélange M de manière à ajuster la teinte de ce dernier au coloris de la jante J.

D'autres formes de mise oeuvre du concept inventif tel que décrit précédemment font également partie de l'invention.

Ainsi il est envisageable, après avoir déterminé l'azimut et la valeur de la masse à déposer à l'aide de la machine d'équilibrage, de sectionner à la demande un tronçon de longueur déterminée en fonction de la masse désirée en prélevant ledit tronçon sur un cordon continu de mélange M réalisé à l'aide du moyen d'extrusion ; Puis, de porter à la température de fusion une partie de la surface du cordon, de préférence au niveau de l'interface entre la masse et la jante, à l'aide d'un moyen de réchauffage approprié et de déposer ce tronçon sur la jante à l'azimut désiré.

Cette forme d'exécution présente l'avantage de ne pas requérir de moyens dédiés importants à proximité du dispositif d'équilibrage sous réserve de pouvoir disposer de rubans de mélange M préfabriqués à l'avance. En particulier, elle peut s'avérer avantageuse dans le cas d'une mise en oeuvre du procédé dans des garages n'effectuant des équilibrages de roues de véhicules automobiles qu'à titre occasionnel.

Enfin, un autre avantage de l'invention réside dans la possibilité de recyclage des masses d'équilibrages. En effet la matière thermoplastique, en particulier celle formulée à partir d'une base polyamide, peut facilement être refondue et, après séparation par décantation des impuretés liées à son utilisation antérieure, il est aisé de réutiliser ce mélange pour alimenter un procédé d'équilibrage tel que décrit ci-dessus.

## Revendications

1. Procédé d'équilibrage d'un ensemble mécanique **caractérisé en ce que** une masse d'équilibrage est déposée directement sur un substrat à l'endroit désiré par extrusion d'une quantité prédéterminée et ajustable d'un mélange (M) constitué d'une matrice thermoplastique et adhésive, et de charges pondérales.

2. Procédé d'équilibrage selon la revendication 1 dans lequel on réalise l'équilibrage d'un ensemble constitué par un pneumatique (P) monté sur une jante (J).

3. Procédé d'équilibrage selon la revendication 2 comprenant les étapes suivantes :
- déterminer sur une machine d'équilibrage (1) l'azimut circonférentiel et la masse nécessaire à la compensation d'un déséquilibre statique ou dynamique de la roue (R),
- positionner la jante (J) de manière à ce que l'azimut circonférentiel ainsi déterminé soit situé en face d'une tête d'extrusion (34) d'un moyen d'extrusion volumique (3),
- ajuster dans les directions radiales et axiales la position de la tête d'extrusion (34), de manière à ce que l'orifice de sortie de la tête d'extrusion (34) vienne affleurer la partie intérieure de la jante (J),
- extruder un volume de mélange (M) correspondant à la masse désirée sur la partie intérieure de la jante (J) de la roue (R) tout en effectuant une rotation relative déterminée de la jante (J) par rapport à la tête d'extrusion, de manière à déposer sur la jante (J) la quantité prédéterminée de mélange (M) sur une longueur, une largeur et une épaisseur contrôlée.

4. Procédé d'équilibrage selon la revendication 3 dans lequel les mouvements relatifs de la jante (J) par rapport à la tête d'extrusion (34) sont synchronisés par un automatisme avec l'opération d'extrusion.

5. Procédé d'équilibrage selon la revendication 3 dans lequel les mouvements relatifs de la jante (J) par rapport à la tête d'extrusion (34) sont ajustés manuellement par un opérateur pendant l'opération d'extrusion.

6. Dispositif d'équilibrage de roue de véhicules automobile (1) **caractérisé en ce qu'**il comprend un moyen d'extrusion volumique (3) apte à déposer une quantité prédéterminée d'un mélange thermoplastique et adhésif (M) sur la partie intérieure de la jante (J) de la roue.

7. Dispositif d'équilibrage selon la revendication 6 dans lequel le moyen d'extrusion (3) est constitué d'un piston dont le déplacement détermine le volume extrudé.

8. Dispositif d'équilibrage de roue de véhicule selon la revendication 6 dans lequel le moyen d'extrusion (3) comprend une pompe à engrenage dont le nombre de rotation détermine le volume extrudé.

9. Mélange (M) destiné à former des masses d'équilibrage contenant une matrice thermoplastique et des charges pondérales de forte densité, **caractérisé en ce que** la matrice thermoplastique présente des caractéristiques d'adhésion avec un substrat.

10. Mélange (M) selon la revendication 9, dans lequel la matrice thermoplastique est formée à partir de copolyamides et de résines.

11. Mélange (M) selon la revendication 9, dans lequel la matrice thermoplastique est formée à partir de réactifs à base de polyuréthane.

12. Mélange (M) selon la revendication 9 dans lequel les charges pondérales de forte densité sont constituées par des poudres métalliques.

13. Mélange (M) selon la revendication 9 dans lequel la matrice thermoplastique est recyclable.
